# EUROPEAN PATENT APPLICATION

(11) **EP 1 188 550 A2**
(43) Date of publication of application: **20.03.2002**
(21) Application number: 01119217.6
(22) Date of filing: 09.08.2001
(51) Int. Cl.: B32B 17/10, B44C 1/16

(54) **Flexible, transparent and elastic band with decorative light-reflecting pattern, applicable to the textile industry**

(30) Priority: 13.09.2000 AR 0004798; 01.03.2001 AR 0100982
(71) Applicant: Kopelowicz, Alberto, Buenos Aires (AR)
(72) Inventor: Kopelowicz, Alberto, Buenos Aires (AR)
(74) Representative: Canela Giménez, Teresa

(57) **Abstract**

An elastic band or strap for use in clothing includes reflective particles sandwiched between two transparent sheets, where at least one of the sheets is a thermoplastic material. A variety of sizes of the particles may be used, and reflective threads may be used as an alternative to the particles. The two transparent sheets may be joined by heating, ultrasound, or by an adhesive. The particles may be joined to one of the sheets by an adhesive.

## Description

### BACKGROUND OF THE INVENTION

### Technical Field

The present invention relates to the fields of textiles and clothing, and more specifically to a flexible, transparent and elastic band with a light-reflecting pattern which may be ornamental or decorative in design.

### Description of the Background Art

Bands known in the textile industry are used for varied purposes, such as for brassiere straps, or in linings for contouring edges of all sorts and types of apparel, as well as others used in between two fabrics to enable the union of those parts that make up the same item of clothing. These are typically textile bands manufactured with knit or non-woven fabrics, having different mixtures that contain synthetic or natural fibers. Many of these bands are decorated using different elements for ornamental purposes and to enhance manufacture. They come in an array of colors, embroidered, patterned, stamped or even see-through.

Other well known items are the metallic sheets through which light may be reflected, yet they are not known to achieve this reflection on both its faces. Therefore, there are no known bands, created for the purposes mentioned before, that have the property of reflecting light through both faces and especially, there are no known bands that besides being flexible are also transparent and elastic.

A typical problem when adding decorative elements to textile bands is that of achieving a stable fixation of what is being added, and of being able to stand stretching and rubbing in such uses. Quality is extremely useful at the time of manufacturing any given apparel since it makes the task easier and at the same time costs may be lowered.

Exemplars of the art are U.S. Patent 5,857,217 issued to Hsueh for *Light Reflecting Band Device,* U.S. Patent 4,769,265 issued to Coburn, Jr. for *Laminated Decorative Film and Methods of Making Same,* U.S. Patent 5,091,232 issued to Coburn, Jr. for *Laminated Decorative Film Providing Pearlescent Appearance or Effect,* U.S. Patent 5,132,148 issued to Reafler for *Flexible and Stretchable Sheet Material Useful in Forming Protective and Decorative Coatings, U.S.* Patent 5,202,180 issued to Watts for *Decorative Web,* U.S. Patent issued to Ellis for *Decorative Sheet Material* and U.S. Patent 4,972,058 issued to Benson et al. for *Surface Heating Food Wrap with Variable Microwave Transmission.* I have found that the art does not disclose adding decorative elements to textile bands that achieve a stable fixation of the added decorative elements, and still be able to be stretched and rubbed.

### SUMARY OF THE INVENTION

It is therefore an object of the present invention to have a textile band that can stably secure decorative elements on the textile band and still be able to be stretched and rubbed.

It is another object to have a textile band that can easily display decorative elements and yet protect the added decorative elements.

It is yet another object to have a textile band with added decorative elements that is easy and inexpensive to manufacture.

It is still yet another object to have a textile band having added decorative elements that is durable.

It is another object to have an apparel made of high quality at the time of manufacturing since it makes the task easier and at the same time costs may be lowered.

It is still another object to have the decorative effect observable on any face of a textile band.

It is still yet another object to have a band applicable to clothing enhancing aesthetic and decorative aspects of the band.

It is another object to have a band that allows the possibility of including a singular recourse with reflecting properties that becomes aesthetically attractive when applied to apparel.

It is still yet another object to have decorative elements added to a textile band that keeps its position with the stretching band.

It is another object for a designer to add to the bands to a variety of ornamental options as far as the distribution of granular particles, such as special alignments, clusters or greater or lesser intensity, drawings, decorations, and other design specifications.

It is another object to have a flexible, transparent and elastic band with light-reflecting decorative pattern, applicable to the textile industry, fit for use as a strap, for clothing trim or finish purposes (contouring), or as a source of joining adjacent fabrics, or any other options pertaining to the apparel industry.

To achieve the above and other objects, the present invention provides a flexible, transparent, see-through, and elastic band. The band includes multiple scattered granular particles throughout the length of the band that are capable of reflecting light.

Such light-reflecting property, inherent to these particles, results in an appealing visual effect, decoratively speaking, and according to the intensity and direction of the light beams different intensity and colors are attained. Regardless of the above mentioned feature, this band has the advantage of attaining the same effect through either one of the two faces of the band, so the clothing manufacturer may apply this band without needing to worry about which side must remain facing outward.

The band includes the combination of two transparent sheets that enclose multiple granular particles made of aluminum, polyester, or metal, with their own colors and individual light-reflecting capacity, hence bestowing the visual effects. Both overlapping sheets are joined together preferably by applying heat so that the granular particles are kept distributed throughout the length of the band so created. Most of the granular particles are separate from each other and remain apart.

At least one of the two sheets must be made of a thermoplastic, transparent material, whereas the overlapping sheet, adhered by heat, could either be thermoplastic or of any other flexible, see-through and elastic fabric which enables the adhesion between both sheets whether by heat or by a specific adhesive.

Between both overlapping sheets there are multiple granular particles that as a result of the adhesion performed, remain substantially flat and stable at a definite position. This special distribution ensures that granular particles will not detach from their stable position even where the band undergoes stretching during use. Undesired loosening through rubbing is also eliminated since the bands containing the particles act both as a shield and as a container.

The decorative elements on surfaces or bodies are stretchable and are able to be rubbed. It is preferable that the granular particles confer shine in varied intensity and capable of reflecting extremely attractive shapes and colors.

The band having a pair of transparent, elastic, overlapping and joined sheets may enclose the multiple light-reflecting granular particles distributed throughout the length of the band.

The sheets may be joined together through heat-welding or by transparent adhesives.

The light-reflecting granular particles can be colored.

The light-reflecting elements can also be artificial faceted stones with at least one mirror-like facet.

The light-reflecting elements can also be small cylindrical tubes having a light-reflective surface.

### BRIEF DESCRIPTION OF THE DRAWINGS

A more complete appreciation of this invention, and many of the attendant advantages thereof, will be readily apparent as the same becomes better understood by reference to the following detailed description when considered in conjunction with the accompanying drawings in which like reference symbols indicate the same similar components, wherein:
Figure 1 is a perspective view showing one of the possible applications for the invented band, in this example a strap for ladies clothing;
Figure 2 is an enlarged illustration, in perspective, showing one of the sheets that make up the band, partially lifted;
Figure 3A and 3B show a cross section view, enlarged, according to the design line III-III indicated in figure 1;
Figure 4 is a plan view showing a portion of the band, pursuant to this invention, as a variant for product application with reflecting properties;
Figure 5 is another plan view, similar to the previous one, showing a variation in the distribution of the granular product;
Figure 6 is another plan view, similar to the previous one, and in this case it illustrates another variation in the distribution of the granular material;
Figure 7 is also a plan view, similar to the previous one, showing in this case another variant using metallic threads;
Figure 8 is a plan view showing another embodiment with one of the sheets lifted;
Figure 9 is a side view of Figure 8 showing the band already conformed;
Figure 10 is a plan view showing another decorative variation using light reflecting elements; and
Figure 11 is a plan view showing a constructive example.

### DETAILED DESCRIPTION OF THE PREFERRED EMBODIMENTS

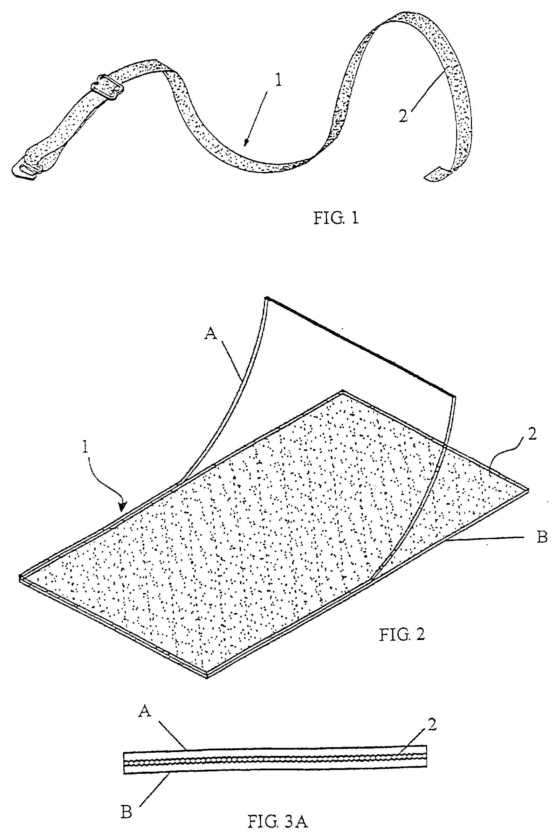

Turning now to the drawings, as seen in Figure 1, band or strap 1, as appropriate as a component in the clothing industry in general, such as used in certain dresses, bras, ladies' bathing suits, etc. The bands may also be used for a T-shirt or undershirt by sewing the material between two fabrics. The band 1 is flexible, transparent and elastic on both faces, and includes multiple granular particles 2 distributed along the band 1.

Particles 2 may take several forms. They may be, for example, metallized plastic granules or particles, such as glitter. Some of these particles are known in some countries, such as Argentina, as "purpurin" which are metallized plastic granules or particles such as a metallized colored polyester. The metallized polyester is provided in different colors and are determined by their sizes. In general, the particles may be made of aluminum, polyester or be simply metallic granules bearing their own colors and enabling light-reflecting properties. Light-reflecting mirror-like plastics and some acrylics may also be used.

Various particle sizes may be used for particles 2. Three typical examples of the size of each one of the individual particles are 0.002 x 0.008 millimeters, 0.004 x 0.008 x 0.008 millimeters, and 0.015 x 0.008 x 0.008 millimeters.

In another embodiment of the invention, somewhat larger particles 2 may be used. These particles are plastic or glass-faceted stones having a mirror reflecting base, typically of thickness about 3 millimeters.

In an alternative embodiment, the strap may include metallic or metallized threads 2d, as seen in Figure 7. These metallic or metallized threads are typically very thin, and may be made, for example, of aluminum or polyester. The metallic threads 2d are normally built on an elastic web defining an outer surface which, as a result of being metallic, is light-reflecting. The same effects can be achieved using, for instance, rayon or similar threads.

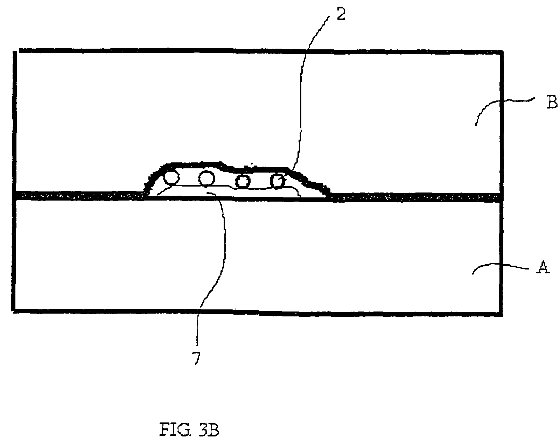

The structure of the band is illustrated in Figures 2 and 3, in which two overlapping sheets A and B act as a support for the multiple granules 2 ensuring their distribution throughout the length of the band in a definite and stable position. The sheets are generally made of a transparent plastic or fabric. Thus, particles 2 are sandwiched between sheets A and B. At least one of the two sheets must be of thermoplastic material. The overlapping sheet may be thermoplastic or of any other flexible, see-through and elastic fabric which enables the adhesion between both sheets, whether by heat or by a specific adhesive such as some polyurethane adhesives.

A cross section of a typical band of the invention is seen in Figure 3A, which illustrates that particles 2 are placed enclosed between both sheets A and B in such a way that the shine and colors reflected could clearly be seen from the outside from either the face of sheet A or the face of sheet B. Figure 3A also illustrates that generally, in the band of the invention, particles 2 are spread out and do not tend to stack on top of each other. Generally, the majority of the particles will not be stacked, and usually nearly all of the particles will not be stacked. This non-stacking arrangement of particles yields an aesthetically pleasing effect in the band.

As noted above, at least one of the sheets A and B must be a thermoplastic material. The material of the band formed after joining sheet A to sheet B is elastic, and physical properties of a typical product which is 95% polyurethane and 5% glitter particles is given in Table I. The typical product is also resistant to oil, cosmetics, soap, sea water, sweat, sunlight and chlorine. The product may be washed in a washing machine and ironed to 80 °C (Celsius). In preparation of clothing containing the band of the invention, the band may be soldered by heat or ultrasound, or may be adhered using an adhesive suitable for polyurethane.

**Table I.**

| Physical properties of a typical product. | |
|---|---|
| Modulus at 100% (ASTM D412) | 46.1 kgf/cm² |
| Modulus at 200% | 68.8 kgf/cm² |
| Modulus at 300% | 126.9 kgf/cm² |
| Ultimate Tensile Strength | 580.9 kgf/cm² |
| Ultimate Elongation | 513.0 |
| Permanent Deformation: | |
| Deformation at 50% | 0.08 |
| Deformation at 100% | 4.40 |
| | |
| Tear Resistance (ASTM D624) | 91.6 kgf/cm |

In the manufacture of the band, sheets A and B are joined together and laminated, enclosing the particles 2. One specific process for the manufacture of the band will now be described.

First, using a conventional printing machine, a particular pattern is projected onto a first polyurethane sheet. The pattern is then printed on the sheet in the form of a polyurethane-based adhesive. Subsequently, the particles 2 are sifted over the adhesive pattern 7. Then, the particles which have not stuck to the adhesive are removed by aspiration or brushing.

The first sheet and the adhesive and particles are covered by a second transparent sheet. The sheets are the joined by thermal fusion. Finally, the resulting fused sheet is cut into bands or strips to make a material which may be made into straps of clothing.

In order to make a strap containing the matallized threads, the above procedure is varied somewhat. Rather than sifting particles over the printed adhesive and then removing the particles, a tube containing a thread or threads is used as a guide to lay out the thread over the adhesive in the desired thread pattern.

As previously mentioned, these overlapping sheets must be transparent, flexible and elastic thus ensuring the reflection effects produced by the granules 2 are clearly seen from the outside and from either face one chooses to look from.

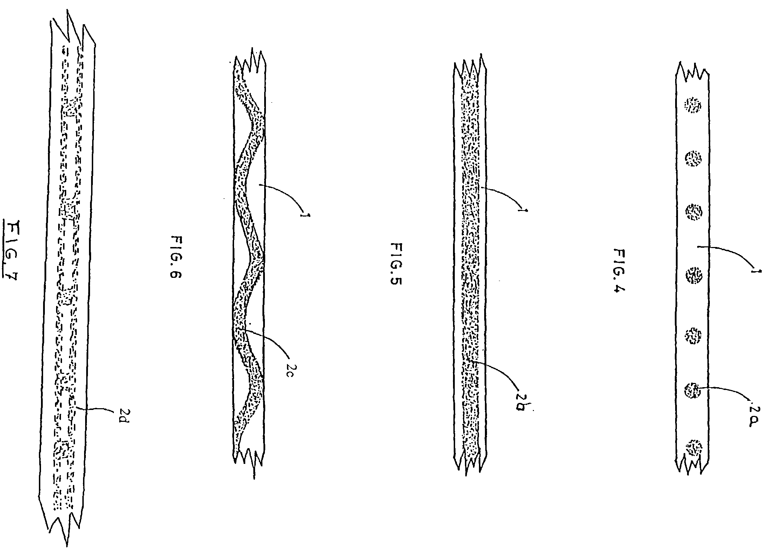

Based on the manufacturing principle mentioned before, examples illustrated in Figures 4, 5 and 6 represent different feasible options in terms of the distribution of granules 2 under given conditions.

Figure 4 shows a band where granules 2a are clustered in circles that are spaced apart from each other and that spread along the whole band. Figure 5 illustrates a band where granules 2b are distributed to create a continuous straight line. Figure 6 shows where granules 2c make up a continuous, somewhat wide and winding or serpentine strip. Figure 7 illustrates the embodiment where the band subject matter of the invention features light-reflecting metallic threads 2d.

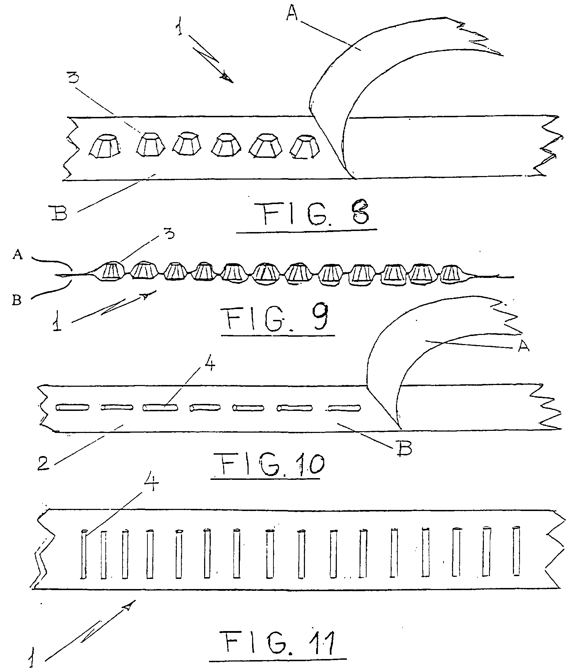

Figures 8 through 11 show further variations of the band 1. Referring to figure 8, the top layer A is lifted up to show the particles added between the layers A and B of the band 1. The elements added between the two layers A and B can be light reflective elements such as artificial faceted stones 3 distributed along the whole band keeping a certain distance between each other. Each of the artificial stones have a mirror-like base to reflect the light. These artificial stones are approximately 3 millimeters thick and can be colored.

Referring to figures 10 and 11, another variation of the band 1 is where includes reflective elements such as small cylindrical tubes 4 made of crystal plastic material, acrylic, or similar material. The small tubes can be distributed in many different manners to achieve different effects. For example, one small tube 4 after the other may be placed to conform to a longitudinal line. Another case has the small tubes 4 being parallel to each other and transversely distributed.

As shown above, between both overlapping sheets there are multiple granular particles that as a result of the adhesion performed, remain substantially flat and stable at a definite position. This special distribution ensures that granular particles will not detach from their stable position even where the band undergoes stretching during use. Undesired loosening through rubbing is also eliminated since the bands containing the particles act both as a shield and as a container. The decorative elements on surfaces or bodies are stretchable and are able to be rubbed. The granular particles may also stretch with the band.

Obviously, the granules or the threads can be any of a wide variety of colors, and multiple colors may readily be used in a single band. These examples show that numerous options may be defined as far as ornamental design is concerned based on the manufacturing principle explained before, thus creating pieces which only differ in the granule distribution format.

## Claims

1. An elastic band, comprising:
a first sheet being transparent;
an adhesive covering a portion of a first surface of said first sheet;
decorative elements in contact with said adhesive, said decorative elements being light-reflecting and the majority of said decorative elements being in an unstacked arrangement relative to said first sheet; and
a second sheet laminated to said first surface of said first sheet and covering said decorative elements and said adhesive, said second sheet being transparent, at least one of said first sheet and said second sheet being made of a thermoplastic material.

2. The elastic band of claim 1, with said first sheet being made of polyurethane.

3. The elastic band of claim 1, with said adhesive being made of polyurethane.

4. The elastic band of claim 1, with said first sheet being made of a thermoplastic material.

5. The elastic band of claim 1, with said second sheet being made of a thermoplastic material.

6. The elastic band of claim 2, with said second sheet being made of polyurethane.

7. The elastic band of claim 1, said first and second sheets being laminated by heat-welding.

8. The elastic band of claim 1, said first sheet being laminated to said second sheet by a transparent adhesive.

9. The elastic band of claim 1, said decorative elements being granular particles.

10. The elastic band of claim 9, said decorative elements being particles having a maximum dimension of approximately 0.008 millimeters.

11. The elastic band of claim 9, said decorative elements being particles having a maximum dimension of approximately 0.015 millimeters.

12. The elastic band of claim 1, said decorative elements being particles having a maximum dimension of approximately 3 millimeters.

13. The elastic band of claim 9, said decorative elements being made of metallized plastic.

14. The elastic band of claim 1, with a first region of said band having decorative elements arranged closely to each other so as to create and opaque decorative pattern, and there being a second region of the band not having decorative elements.

15. The elastic band of claim 1, having each one of said decorative elements being a predetermined distance from another decorative element.

16. The elastic band of claim 1, with said decorative elements being colored.

17. The elastic band of claim 1, with said decorative elements being a metallic colored polyester material.

18. The elastic band of claim 1, with said decorative elements being colored metallic threads.

19. The elastic band of claim 1, with said decorative elements being artificially faceted stones having at least one mirrored facet.

20. The elastic band of claim 1, with said decorative elements being distributed in alternate clusters at a distance from each other.

21. The elastic band of claim 1, with said decorative elements being distributed in the shape of continuous lines.

22. The elastic band of claim 1, with said decorative elements being distributed in a pattern of multiple clusters.

23. The elastic band of claim 1, with said decorative elements being small cylindrical tubes built of a light reflecting material.

24. The elastic band of claim 23, with said cylindrical tubes being disposed to conform to a longitudinal line.

25. The elastic band of claim 23, with said cylindrical tubes being small tubes parallel to each other and transversely distributed.

26. The elastic band of claim 23, with said cylindrical tubes comprising of a crystal plastic material or acrylic material.

27. The elastic band of claim 1, with said first sheet and second sheet being coupled together by heat or ultrasound, or adhered using an adhesive suitable for polyurethane.

28. The elastic band of claim 1, with said decorative elements stretching along with said first and second sheets.

29. The elastic band of claim 1, with the other one of said first and second sheets being of a flexible, transparent, elastic fabric enabling the adhesion between both first and second sheets by heat or a polyurethane adhesive.

30. An elastic band, comprising:
A first sheet being transparent;
An adhesive covering a portion of a first surface of said first sheet, said adhesive being transparent;
A plurality of particles in contact with said adhesive, said particles being light-reflecting, said particles being in an unstacked arrangement relative to said first sheet, said particles not being in contact with each other; and
A second sheet laminated to said first surface of said first sheet and covering said decorative elements and said adhesive, said second sheet being transparent, one of said first sheet and second sheet being made of a thermoplastic material.

31. The elastic band of claim 30, with said first sheet being made of polyurethane.

32. A method, comprising the steps of:
projecting a particular pattern onto a first sheet;
printing said pattern on said first sheet in a form of an adhesive;
sifting a plurality of decorative elements over said pattern of said adhesive;
removing said decorative elements not adhering to said adhesive by aspiration or brushing;
covering said first sheet and decorative elements by a second sheet;
thermally fusing said first sheet and said second sheet together; and
cutting said thermally fused first and second sheets into bands accommodating straps of clothing.

33. The method of claim 32, with one of said first or second sheets comprising of a polyurethane material, said first and second sheets being transparent.

34. The method of claim 33, with said decorative elements being light reflective and comprising of a metallic colored polyester.

35. A method, comprising the step of:
projecting a particular pattern onto a first sheet;
printing said pattern on said first sheet in a form of an adhesive;
guiding by a tube containing a plurality of metallized threads to lay out said metallized threads over said adhesive in a desired thread pattern;
covering said first sheet and said metallized threads by a second sheet;
thermally fusing said first sheet and said second sheet together by thermal fusion; and
cutting said thermally fused first and second sheets into bands accommodating straps of clothing.

36. The method of claim 35, with one said first or second sheets comprising of a polyurethane material, said first and second sheets being transparent.

37. The method of claim 36, with said metallized threads being light reflective and comprising of a metallized colored polyester.
